# EUROPEAN PATENT APPLICATION

(11) **EP 2 533 233 A1**
(43) Date of publication of application: **12.12.2012**
(21) Application number: 11186649.7
(22) Date of filing: 26.10.2011
(51) Int. Cl.: G09G 3/34, G06F 3/14, G06F 3/01

(54) **Active flexible display and method for controlling the same**

(30) Priority: 08.06.2011 KR 20110055309
(71) Applicant: Pantech Co., Ltd., Seoul 121-792 (KR)
(72) Inventor: Ko, Jung-Suk, 121-792 Seoul (KR); Kim, Kyong-Mi, 121-792 Seoul (KR)
(74) Representative: Herzog, Markus

(57) **Abstract**

Included in an active flexible display is flexible display unit to output an image; and a driving unit to deform the display unit based on a voltage being applied to the display unit. A method to control a flexible display includes recognizing an occurrence of a specific event; and applying a voltage to deform the active flexible display to a shape based on the recognized event.

## Description

### CROSS-REFERENCE TO RELATED APPLICATION(S)

This application claims priority from and the benefit under 35 U.S.C. §119(a) of Korean Patent Application No. 10-2011-0055309, filed on June 8, 2011, which is incorporated by reference for all purposes as if fully set forth herein.

### BACKGROUND

FIELD

The following description relates to a display, and more particularly, to a flexible display that may be deformed.

DISCUSSION OF THE BACKGROUND

Flexible displays are displays that use substrates formed of a flexible material, such as a plastic material, and can be bent, folded or rolled up without causing damage to the substrates included therein. Flexible displays are different than flat panel displays (FPDs), and may be referred to as paper-like display or digital paper.

Flexible displays are largely classified as electronic paper (e-paper-type) flexible displays, which use the flexibility of existing FPDs and a paper-type flexible display, and may use ink balls or capsules with a diameter of 0.1 mm or less, such as those used in typical printing operations. For example, the e-paper-type flexible display may include and be realized with liquid crystal displays (LCD), an organic light-emitting diodes (OLED), and the like. The paper-type flexible display may include and be realized with electrophoretic flexible displays, twist ball-type flexible displays, reflective flexible displays, a thermal rewritable flexible displays, and the like.

Flexible displays are passive in that they are deformed by an external physical force. Thus, flexible displays are rugged, as they may be bent, or rolled by an external physical force to improve mobile convenience.

However, there are limits in using flexible displays in connection with various operations. Because of these limits, demand has grown for improving the performance of flexible displays so that data from flexible displays may be more actively and intuitively processed.

### SUMMARY

This disclosure relates to an apparatus and method for controlling a flexible display and producing various display effects, by controlling the movement and deformation of a flexible display actively in response to application to various events, such as an external physical force or audio/visual stimulus.

Additional features of the invention will be set forth in the description which follows, and in part will be apparent from the description, or may be learned by practice of the invention.

An exemplary embodiment provides an active flexible display, including a flexible display unit to output an image; and a driving unit to deform the flexible display unit based on a voltage being applied to the display unit.

An exemplary embodiment provides apparatus to control a flexible display, the apparatus including: a recognition unit to recognize an event; a memory to store a deformation pattern information corresponding to the recognized event; a search module to search for and find the deformation pattern information from the memory; and an execution instruction module to output a voltage application control signal based on the deformation pattern information.

An exemplary embodiment provides a method for controlling an active flexible display, the method including: recognizing an occurrence of a specific event; and applying a voltage to deform the active flexible display to a shape based on the recognized event.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a diagram illustrating an active flexible display according to an exemplary embodiment.

FIGS. 2(a) and (b) are diagrams illustrating an active flexible display according to an exemplary embodiment.

FIG. 3 is a diagram illustrating an ionic polymer-metal composite (IPMC) layer according to an exemplary embodiment.

FIG. 4 is a diagram illustrating a cell-type active flexible display according to an exemplary embodiment.

FIG. 5 is a diagram illustrating various deformed shapes of a driving unit according to an exemplary embodiment.

FIG. 6 is a diagram illustrating various shapes of an active flexible display according to an exemplary embodiment.

FIGS. 7A through 7D are diagrams illustrating various shapes of an active flexible display according to an exemplary embodiment.

FIG. 8 is a diagram illustrating an active flexible display according to an exemplary embodiment.

FIG. 9 is a diagram illustrating of a power supply unit according to an exemplary embodiment.

FIG. 10 is a flowchart illustrating a method for controlling an active flexible display according to an exemplary embodiment.

FIGS. 11 through 22 are diagrams illustrating examples of deforming an active flexible display according to an exemplary embodiment.

Throughout the drawings and the detailed description, unless otherwise described, the same drawing reference numerals should be understood to refer to the same elements, features, and structures. The relative size and depiction of these elements may be exaggerated for clarity, illustration, and convenience.

### DETAILED DESCRIPTION OF THE ILLUSTRATED EMBODIMENTS

The invention is described more fully hereinafter with reference to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that for the purposes of this disclosure, "at least one of X, Y, and Z" can be construed as X only, Y only, Z only, or any combination of two or more items X, Y, and Z (e.g., XYZ, XYY, YZ, ZZ).

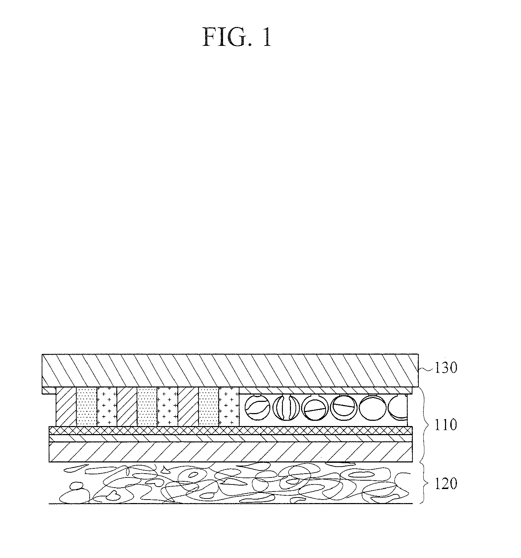

FIG. 1 is a diagram illustrating an active flexible display according to an exemplary embodiment.

The term 'display' indicates a hardware device that may be an interface between an electronic device and a user, and that displays electric information output by an electronic device as pattern information, such as numbers, characters, geometric figures, images, and the like, which can be visually perceived by a user, by converting the electric information into optical information.

Referring to FIG. 1, the active flexible display may include a display unit 110 and a driving unit 120. A layer corresponding to an input device unit 130, such as a touch screen, may be provided on the display unit 110.

The display unit 110 may be a flexible display unit, and may display an image that is received from an external source. The driving unit 120 may be attached to a side opposite the input device unit 130 of the display unit 110, and may deform the flexible display unit 110 in response to a voltage being applied thereto by an external source. The driving unit 120 may be attached to the entire side of the display unit 110 or to a portion of the side of the display unit 110.

The driving unit 120 may include a device that allows contraction and/or expansion in response to a voltage being applied to deform the flexible display unit 110. For example, the driving unit 120 may include an ionic polymer-metal composite (IPMC) layer.

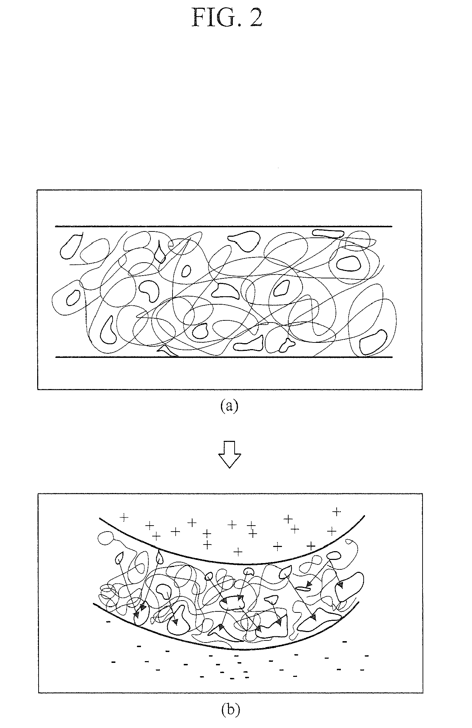

FIGS. 2(a) and (b) are diagrams illustrating an active flexible display according to an exemplary embodiment.

Referring to FIG. 2(a), before the application of a voltage to an IPMC layer, the IPMC layer may be flat. Referring to FIG. 2(b), in response to a voltage being applied to the IPMC layer, a first side of the IPMC layer may contract, and a second side of the IPMC layer may expand, thereby leading to the IPMC layer being bent.

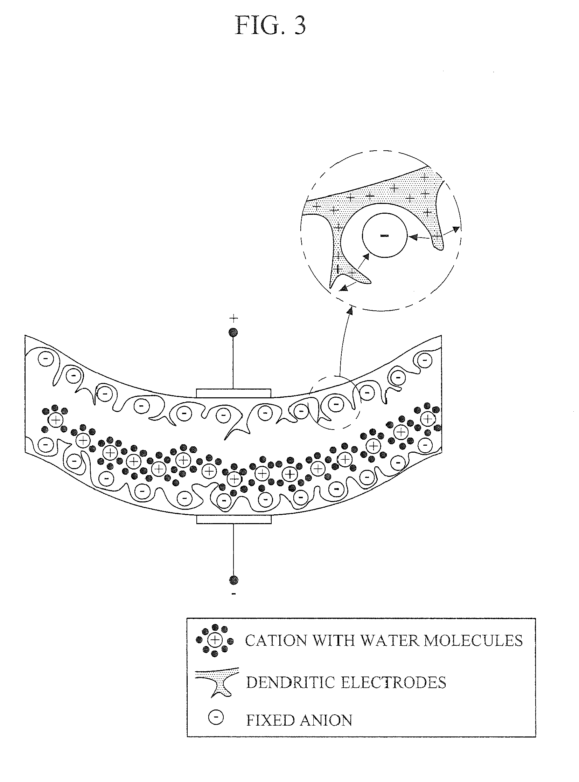

FIG. 3 is a diagram illustrating an ionic polymer-metal composite (IPMC) layer according to an exemplary embodiment.

Referring to FIG. 3, in response to a voltage being applied between two electrodes of an IPMC layer, cations (+) that are hydrated in the IPMC layer may migrate to the cathode of the IPMC layer (located on the second side). Accordingly, the cathode of the IMPC layer may expand, and the anode of the IPMC layer may contract (located on the first side). This results in IMPC layer being bent. Since the driving unit 120 may be in an IPMC layer, is bent with respect to an operation of a specific electrode, the driving unit 120 may be include a plurality of matrix cells with a specific size to effectively deform the flexible display unit 110 in various manners. The specific size may be based on the placement of electrodes for each cell.

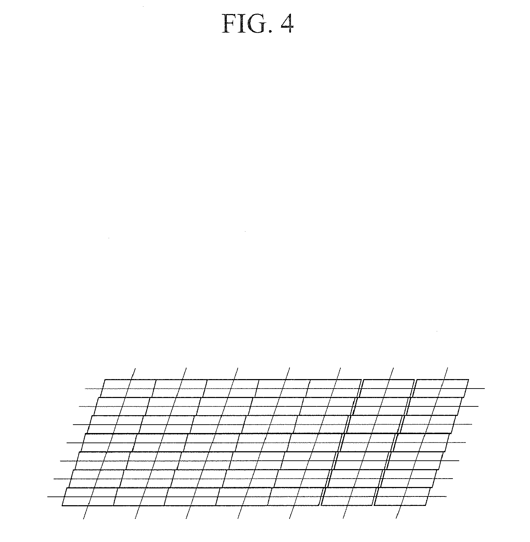

FIG. 4 is a diagram illustrating a cell-type active flexible display according to an exemplary embodiment.

Referring to FIG. 4, the driving unit 120 may be divided into a plurality of matrix cells, and may be driven by applying a voltage to each of the matrix cells. Therefore, it is possible to properly respond to a slight change in the shape of the flexible display unit 110 and thus to improve the resolution of the flexible display unit 110.

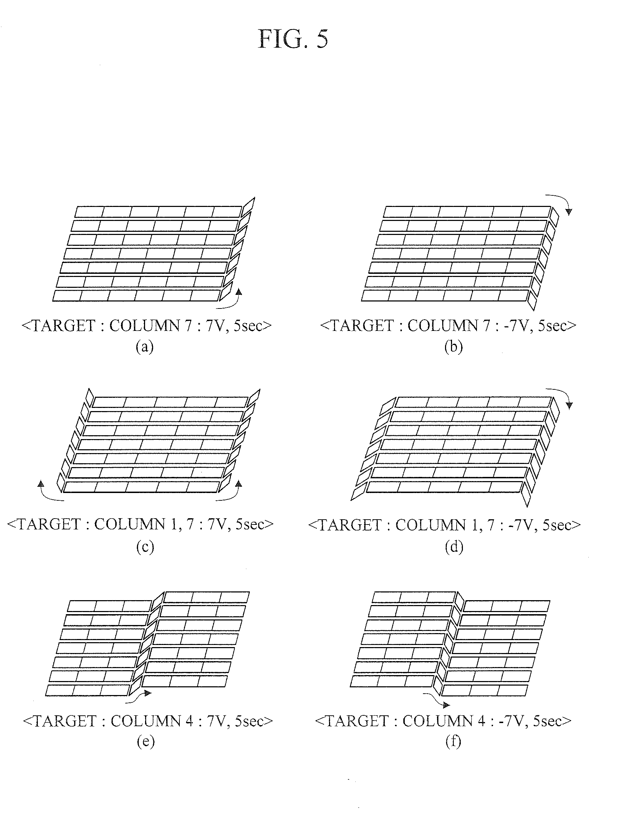

FIG. 5 is a diagram illustrating various deformed shapes of a driving unit according to an exemplary embodiment.

The voltage applied to the driving unit 120 may be within a range of 7V to -7V, and for five seconds.

Referring to FIG. 5(a), in response to a voltage of 7V being applied to a seventh column of matrix cells of the driving unit 120, the seventh column of the driving unit 120 may be bent upward. Referring to FIG. 5(b), in response to a voltage of -7V being applied to the seventh column of matrix cells, the seventh column of the driving unit 120 may be bent downward. Referring to FIG. 5(c), in response to a voltage of 7V being applied to a first column of matrix cells and the seventh column of matrix cells, the first and seventh columns of matrix cells may both be bent upward. Referring to FIG. 5(d), in response to a voltage of -7V being applied to the first and seventh columns of matrix cells, the first and seventh columns of matrix cells may both be bent downward. Referring to FIG. 5(e), in response to a voltage of 7V being applied to a fourth column of matrix cells, the fourth column of matrix cells may be bent upward. Referring to FIG. 5(f), in response to a voltage of -7V being applied to the fourth column of matrix cells, the fourth column of matrix cells may be bent downward. In the example above, specific voltages and times are used; however, the voltage amount and times are not limited hereto, for example, 5V to -5V, 9V to -9V, 8V to -4V, etc.

Thus, a fixed voltage may be applied to one or more columns of matrix cells. Further, a fixed voltage may be applied to one or more rows of matrix cells so that the driving unit 120 may be deformed in a latitudinal direction, instead of in a longitudinal direction. Moreover, voltages within a specific range, instead of a fixed voltage, may be applied to one or more columns or rows of matrix cells. Accordingly, the flexible display unit 110 may be deformed in various manners.

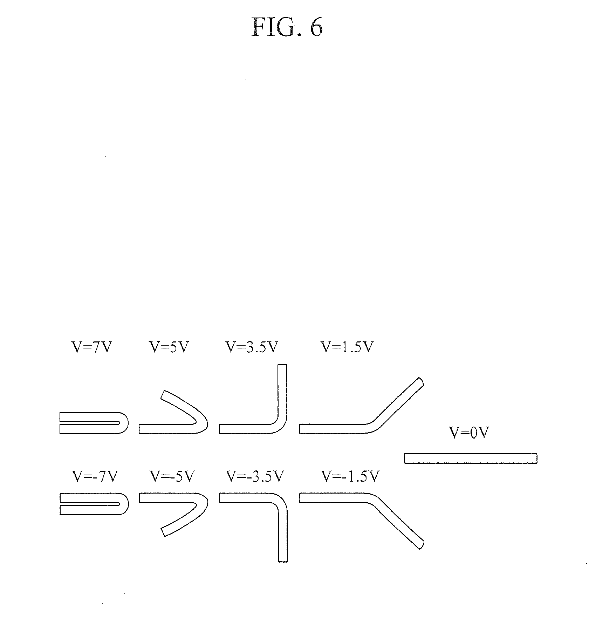

FIG. 6 is a diagram illustrating various shapes of an active flexible display according to an exemplary embodiment.

Referring to FIG. 6, a voltage within the range of -7V to 7V may be applied to each cell of an IPMC layer, and the degree to which the IPMC layer is bent may vary depending on the voltage applied. For example, referring to FIG. 4, higher voltage applied to a cell of the IPMC layer, causes the IPMC layer to be bent more, and lower voltage applied to each cell of the IPMC layer, causes the IPMC layer to be bent less. Thus the amount of deformation is dependent on the voltage applied.

Since the driving unit 120 is deformed in response to application of a voltage, the display unit 110, which is attached to the driving unit 120, may also be deformed in the same or similar shape as the driving unit 120. Accordingly, by controlling the application of a voltage to the driving unit 120, it is possible to control the deformation of the display unit 110.

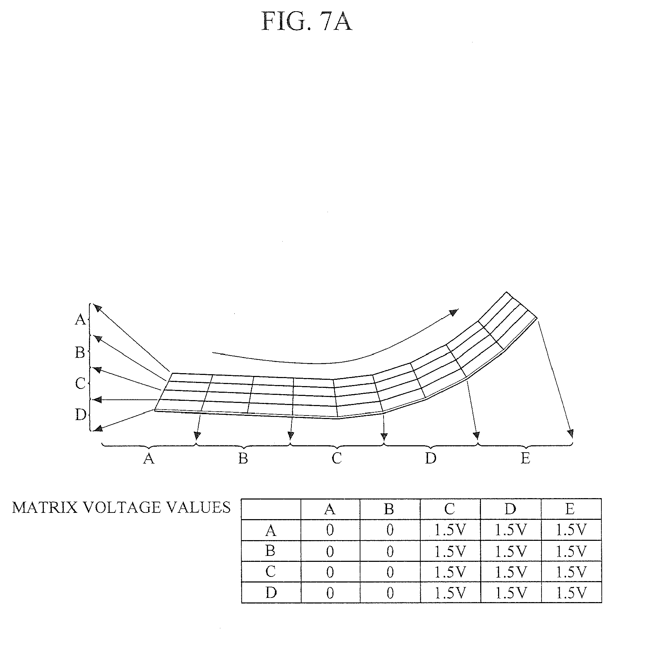

FIGS. 7A through 7D are diagrams illustrating various shapes of an active flexible display according to an exemplary embodiment.

Referring to FIGS. 7A-7D, it will be understood that an application of voltage with one polarity leads the matrix cell columns to be bent in a first orientation, and the application of voltage of an opposite polarity causes the matrix cell columns to be bent in an opposite orientation.

Referring to FIG. 7A, in response to a voltage of 1.5V being applied to matrix cell columns C, D, and E, the matrix cell columns C, D, and E may be bent upward.

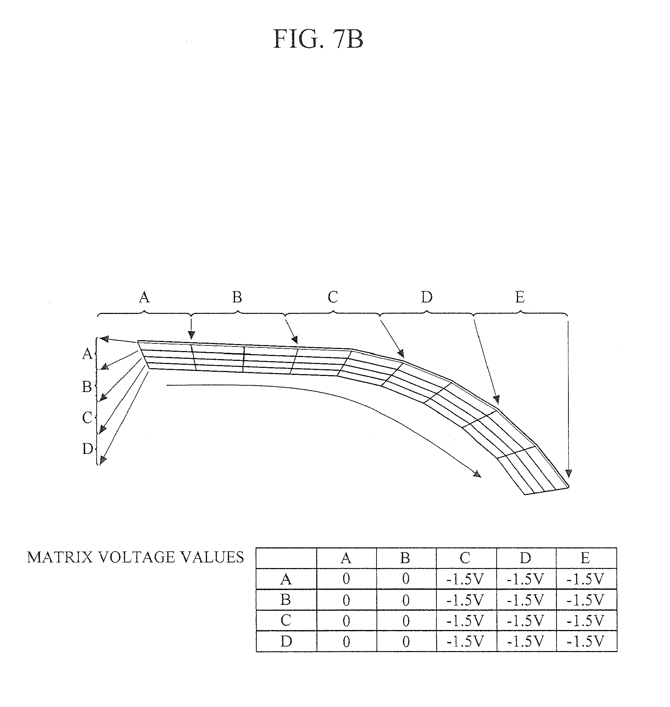

Referring to FIG. 7B, in response to a voltage of -1.5V being applied to the matrix cell columns C, D, and E, the matrix cell columns C, D, and E may be bent downward.

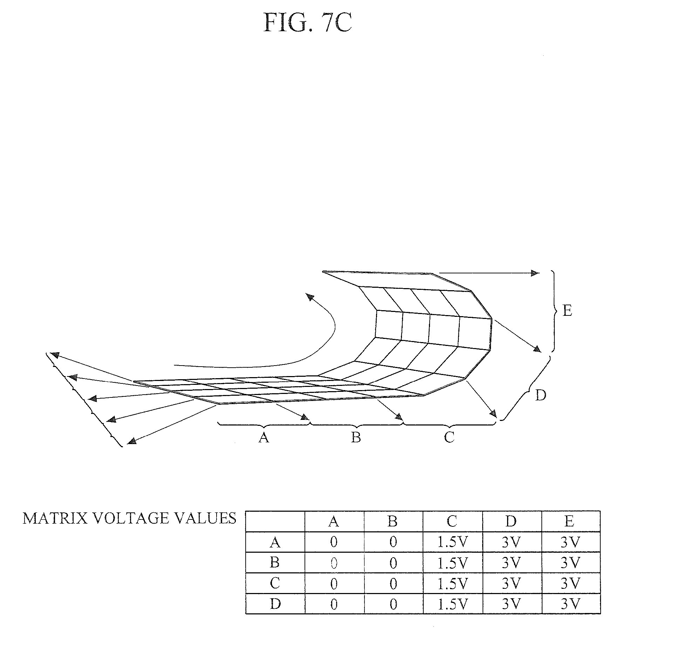

Referring to FIG. 7C, in response to a voltage of 1.5V being applied to the matrix cell column C and a voltage of 3V being applied to the matrix cell columns D and E, the matrix cell columns C, D, and E may all be bent upward, and the matrix cell columns D and E are bent more (at a steeper angle) than the matrix cell column C.

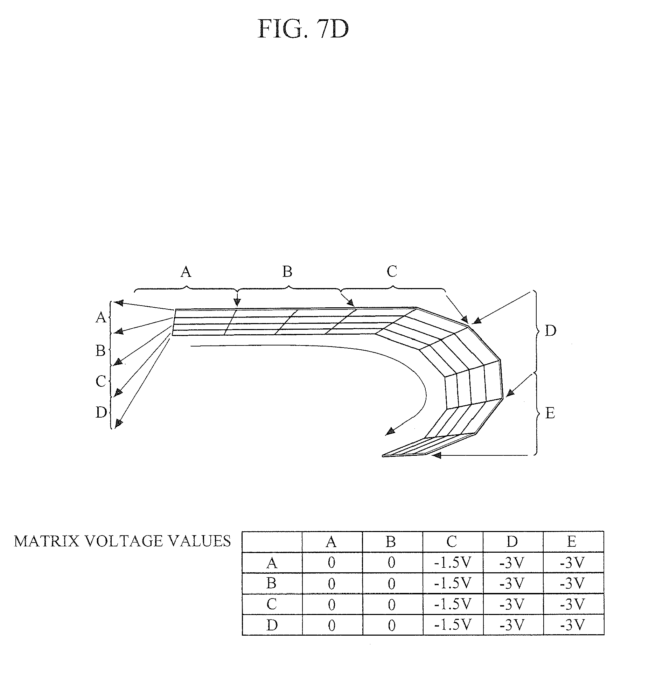

Referring to FIG. 7D, in response to a voltage of -1.5V being applied to the matrix cell column C and a voltage of -3V being applied to the matrix cell columns D and E, the matrix cell columns C, D, and E may all be bent downward, and the matrix cell columns D and E are bent more (at a steeper angle) than the matrix cell column C.

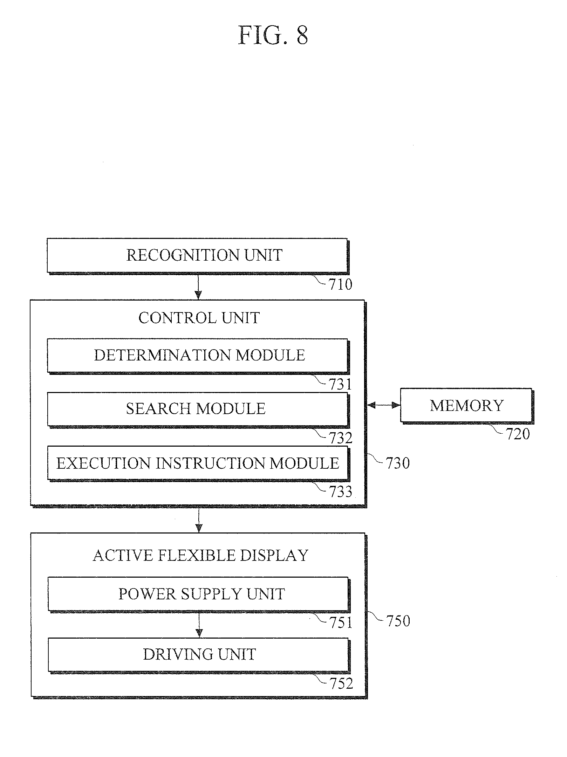

FIG. 8 is a diagram illustrating an active flexible display according to an exemplary embodiment.

Referring to FIG. 8, the apparatus includes a recognition unit 710, a memory 720, a control unit 730, a power supply unit 751, and an active flexible display 750. The recognition unit 710 may include various modules to recognize various events associated with an electronic device, such as a mobile terminal, being driven. Specifically, the recognition unit 710 may include an input unit such as a touch screen, an external input/output unit, a communication module and an input/output port, a sensor unit, a terrestrial magnetism sensor, a gyro-sensor, and a global positioning system (GPS), an application recognition unit that recognizes an application being executed in the apparatus, a call volume/state recognition unit that recognizes the volume and state of each call, and the like.

The memory 720 may store deformation pattern information corresponding to a plurality of different deformed shape patterns of the active flexible display 750. For example, the deformation pattern information may be defined and automatically stored in response to a menu or application being generated or activated. Further, the deformation pattern information may be entered by an operator, such as a user. The memory 720 may be an external storage device that stores data semi-permanently or a non-volatile memory, such as a read only memory (ROM), a NAND flash memory, or the like.

The control unit 730 may detect and/or receive deformation pattern information corresponding to information received from the recognition unit 710, and may output a voltage application control signal to control an application of a voltage to the matrix cells of a driving unit 752 based on the detected deformation pattern information. The control unit 730 may include a determination module 731, a search module 732, and an execution instruction module 733.

The determination module 731 may determine the type of signal recognized by the recognition unit 710. The type of signal may direct the type of action requesting a deformation. For example, the determination module 731 may determine whether the signal recognized by the recognition unit 710 is a signal that requests a specific application, a signal that initiates a call, or a signal that indicates the occurrence of shock in a mobile terminal.

The search module 732 may search the memory 720 (which is connected to the control unit 730) for a deformation pattern corresponding to the signal type determined by the determination module 731.

The execution instruction module 733 may generate a voltage application control signal to control application of a voltage to the matrix cells of the driving unit 752 and may output the voltage application control signal to the power supply unit 751 to control the active flexible display 750 to be deformed in a deformation pattern based on the retrieved deformation pattern from the memory 720. The voltage application control signal may include matrix cell location information indicating which matrix cells to apply a voltage to, and voltage level information indicating the level of the voltage.

The active matrix display 750, which is connected to the control unit 730, may include a power supply unit 751 and a driving unit 752. The power supply unit 751 may apply a voltage to each matrix cell of the driving unit 752 based on the voltage application control signal.

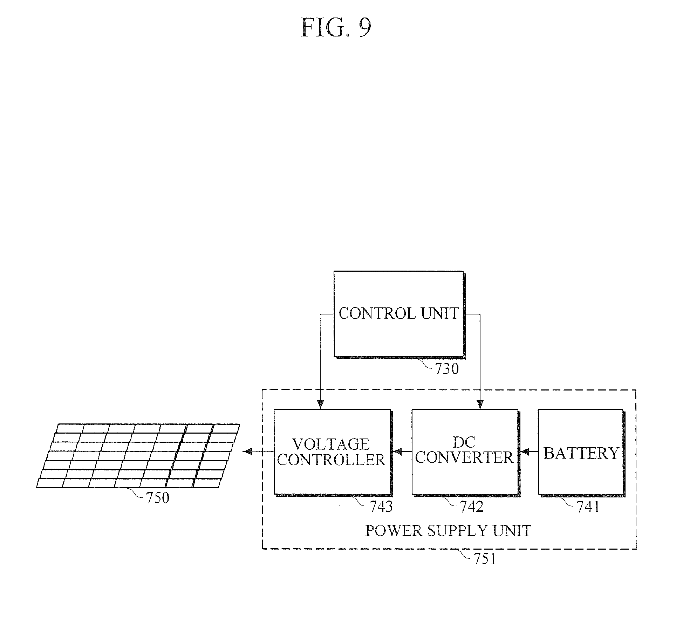

FIG. 9 is a diagram illustrating a power supply unit 751 according to an exemplary embodiment.

Referring to FIG. 9, the power supply unit 751 includes a battery 741, a direct-current (DC) converter 742, and a voltage controller 743.

The battery 741 may be a power supply source. For example, the battery 741 may be, but is not limited to, a battery for use in or with a portable electronic device, such as a mobile terminal, or the like. Various types of power supply sources may be used as the battery 741.

The DC converter 742 may convert a power supply voltage supplied by the battery 741 into a DC signal to properly supply a voltage to the driving unit 752 based on a voltage application control signal from the control unit 730. For example, if the voltage application control signal indicates that a voltage of 3V is to be applied to the driving unit 752, the DC converter 742 may convert the power supply voltage into a DC voltage of 3V, and output the DC voltage of 3V. In response to an alternating-current (AC) power supply voltage being supplied, the DC converter 742 may convert the AC power supply voltage into a DC voltage, and may supply the DC voltage to the driving unit 752.

The voltage application control signal may include information indicating one or more voltage levels, as shown in FIGS. 7C and 7D. For example, to deform the active flexible display 750 in various shapes, one or more DC voltages may be applied to the driving unit 752. The DC converter 742 may be configured to be able to output one or more DC voltages at the same time, or one or more of DC converter 742 may be provided in the power supply unit 751. The voltage controller 743 may control a voltage provided by the one or more DC converter 742 to be applied to the one or more matrix cells of the driving unit 752 designated by the voltage application control signal to be applied to the active flexible display 750 with reference to matrix cell location information and voltage level information included in the voltage application control signal. In a case in which one or more DC voltages are applied to the driving unit 752, one or more of the DC converter 742 and one or more voltage controller 743 (with their being a one to one correspondence between the respective one or more DC converter 742 and the one or more voltage controller 743) may be provided in the power supply unit 751. The voltage controller 743 may be configured to be able to apply one or more DC voltages to the active flexible display 750 at the same time.

The active flexible display 750 includes a display unit (not shown) and the driving unit 752. The display unit may be a flexible display unit. The driving unit 752 may be attached to a side (such as the bottom) of the display unit, and may deform the display unit in response to a voltage being applied thereto by an external source. The driving unit 752 may include a plurality of matrix cells. Each of the matrix cells may be deformed in response to a voltage being applied thereto by the power supply unit 751. The driving unit 752 may include an IPMC layer.

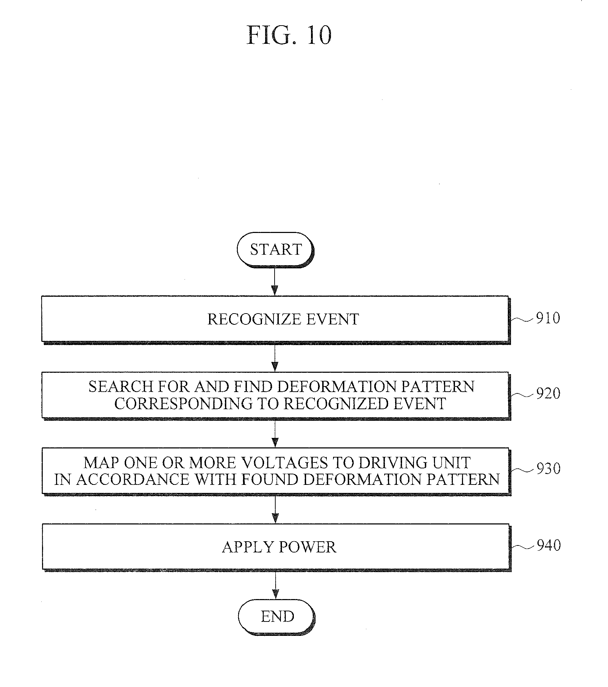

FIG. 10 is a flowchart illustrating a method for controlling an active flexible display according to an exemplary embodiment.

Referring to FIG. 10, in 910, an apparatus to control an active flexible display may recognize an occurrence of a specific event in an electronic device, such as a mobile terminal. The specific event may include executing, driving and/or operating an application, selecting an icon from a display, external/internal noise, external/internal shock, and various other events that may occur in association with or during the operating of the electronic device. In 920, the apparatus may search for deformation pattern information corresponding to the event recognized in operation 910. A deformation pattern information may be defined and automatically stored in the apparatus in response to a menu or application being generated, or may be entered through an input. In 930, the apparatus may determine one or more voltages to be applied to a driving unit of an active flexible display and one or more matrix cells of the driving unit to which the voltages are to be applied based on the deformed shape pattern retrieved in 920. The apparatus may determine the matrix cell location information and the voltage level information as described above. In 940, the apparatus may apply the determined voltages to the determined matrix cells.

The following examples described below are directed to the apparatus of FIG. 8 and method of FIG. 10.

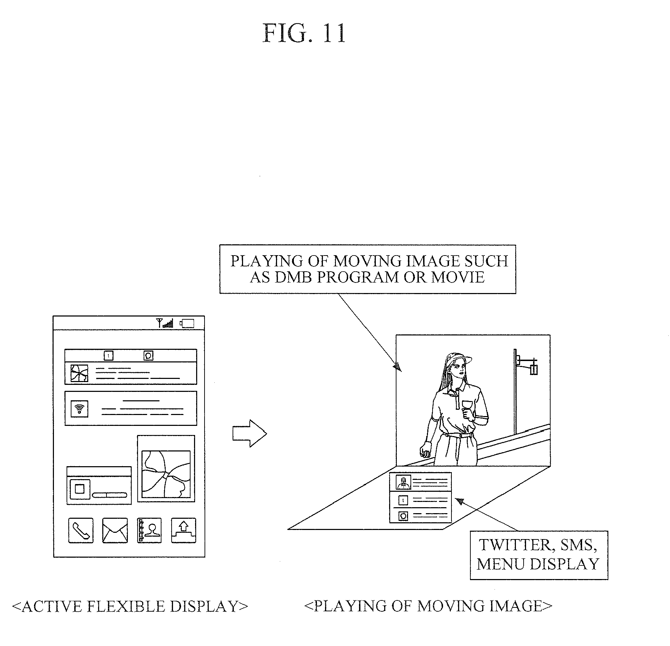

FIGS. 11 through 22 are diagrams illustrating examples of deforming an active flexible display according to an exemplary embodiment.

Referring to FIG. 11, in response to a signal that requests playing of a digital media broadcasting (DMB) program or a moving image, such as a received or downloaded movie, the apparatus may search for and find a display division pattern from the memory 720, and may apply a voltage to the driving unit 752 with reference to the retrieved display division pattern. Accordingly, the driving unit 752 may be deformed, and the active flexible display 750 may be folded based on the retrieved display pattern, or a specific amount, to provide an optimal display based on the media being viewed. For example, the active flexible display 750 may be divided into two sections by being folded in half. A DMB program or file may be displayed on one section, and various operations, such as, menus, keyboard, or the like, may be performed on the other section. The sections used (such as a top section or bottom section) for each operation may be configured, for example, to view multimedia data or operate the device.

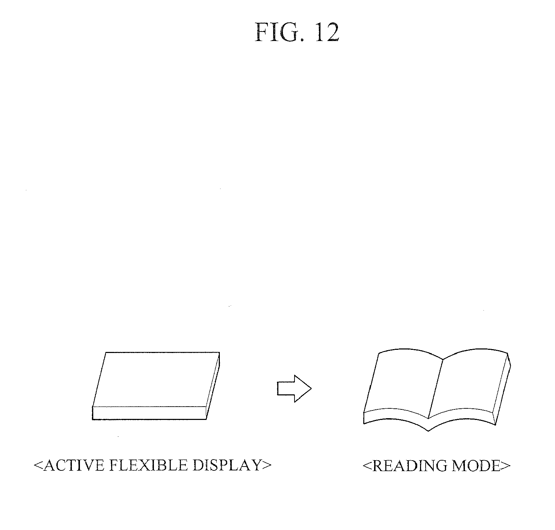

Referring FIG. 12, an apparatus may receive a signal that requests a reading mode. The media being read may be any sort of content, such as a text file, a comic book, a photo album, or the like. The apparatus may provide the feel of reading a real book. In response to the reading mode being set, an LCD, such as the active flexible display 750, may be deformed into the shape of an open book, thereby providing the feel of reading a real book.

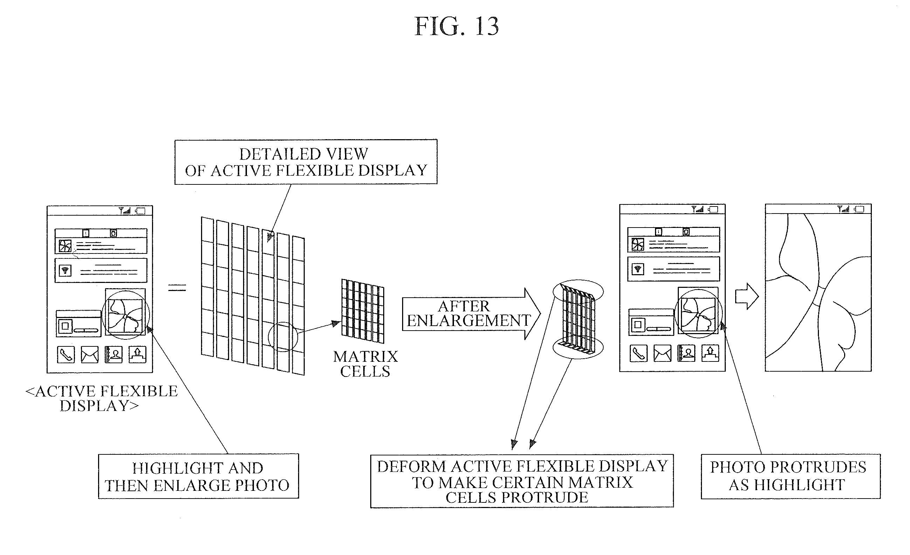

Referring to FIG. 13, in response to a touch being detected on a specific portion of the active flexible display 750 on which a photo or a document may be displayed, the power supply unit 751 may apply a voltage to one or more matrix cells of the driving unit 752 corresponding to the specific portion. Accordingly, the active flexible display 750 may be deformed so that a portion of the photo or the document corresponding to the specific portion can be enlarged. Further, a portion of the photo or the document corresponding to the specific portion may be enlarged and displayed on the entire active flexible display 750.

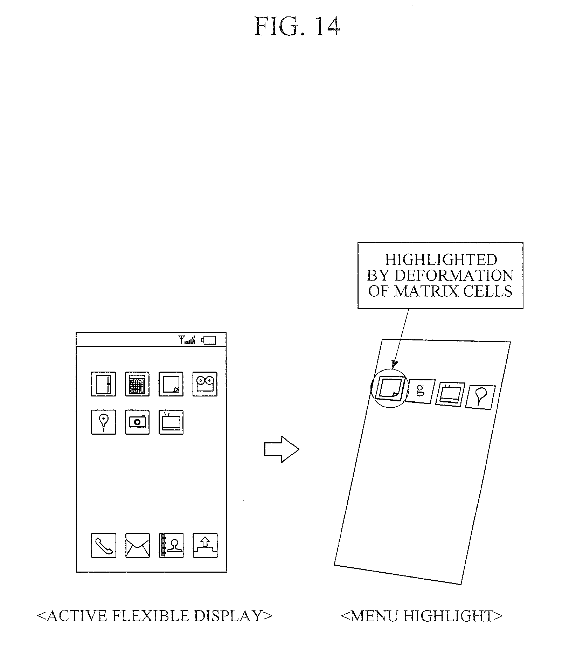

Referring to FIG. 14, one or more menu icons, among a plurality of menu icons, used more frequently may be configured to protrude based on a stored deformation pattern. Further, the frequently used menu icons may be highlighted.

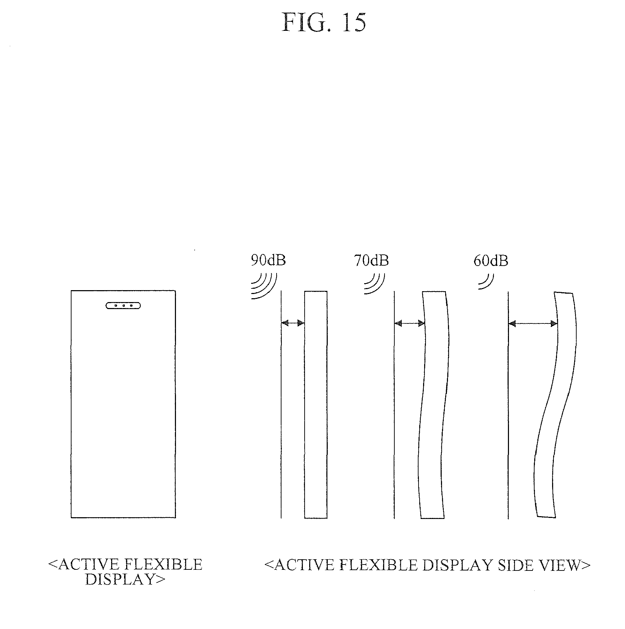

Referring to FIG. 15, the apparatus may be influenced by and recognize ambient noise during a call, and may deform the active flexible display 750 based on a request to adjust the volume of the call. The recognition unit 710 may recognize ambient noise during a call, and the control unit 730 may perform data processing based on the recognized ambient noise. The control unit 730 may apply power to the driving unit 752 based on the results of the data processing. As a result, the driving unit 752 may deform the active flexible display 750, as shown in FIG. 15, so that the distance between an ear of an operator of the phone and the active flexible display 750 is adjusted, thereby causing the perceived volume of the call to also be adjusted.

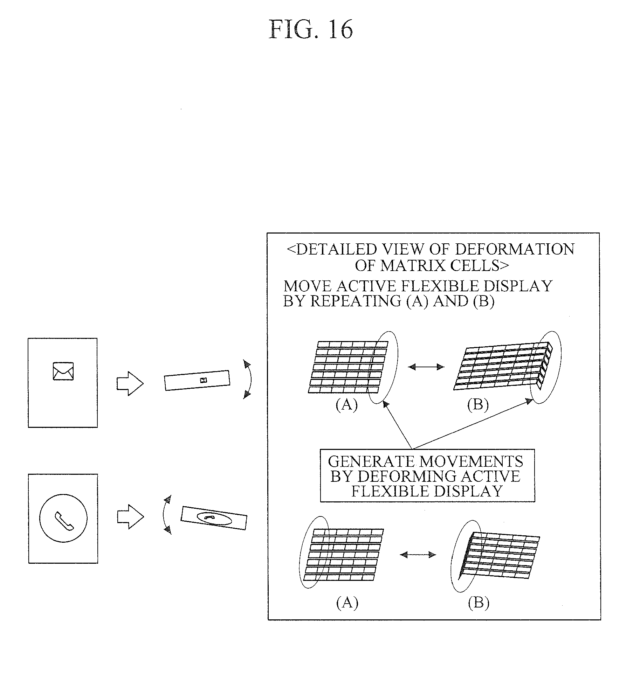

Referring to FIG. 16, the recognition unit 710 may recognize the occurrence of an event, such as an incoming call or message, and the control unit 730 may search for and find a deformation pattern for the active flexible display 750 from the memory 710, and may perform data processing based on the event and the retrieved deformation pattern. The power supply unit 751 may apply power to a specific portion of the driving unit 752 at intervals of time causing the active flexible display 750 to move. Thus, an operator of the apparatus may be notified of an event based on the movement of the active flexible display 750. Moreover, the active flexible display 750 may be deformed in different shapes for different callers.

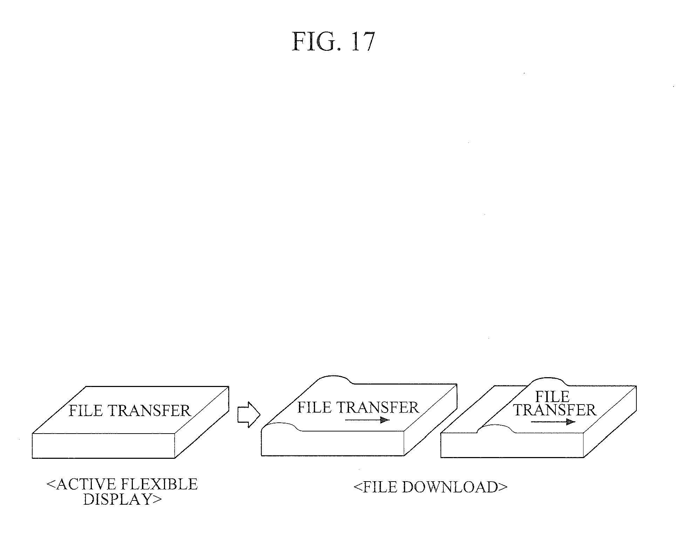

Referring to FIG. 17, the apparatus may provide a visual effect that represents the download progress of a file by deforming the active flexible display 750. The recognition unit 710 may recognize that a file is being downloaded, and the control unit 730 may search for and find a deformation pattern corresponding to file downloading, and may give an instruction to execute the retrieved deformation pattern. The power supply unit 751 may apply power to the driving unit 752 based on the retrieved deformation pattern so that the driving unit 752 may control the active flexible display 750 to move in or be deformed in a specific manner. As shown in FIG. 17, the driving unit 752 may control the active flexible display 750 to move in a wave-like form. Accordingly, a user may recognize the download progress of the file based on the deformation of the active flexible display 750.

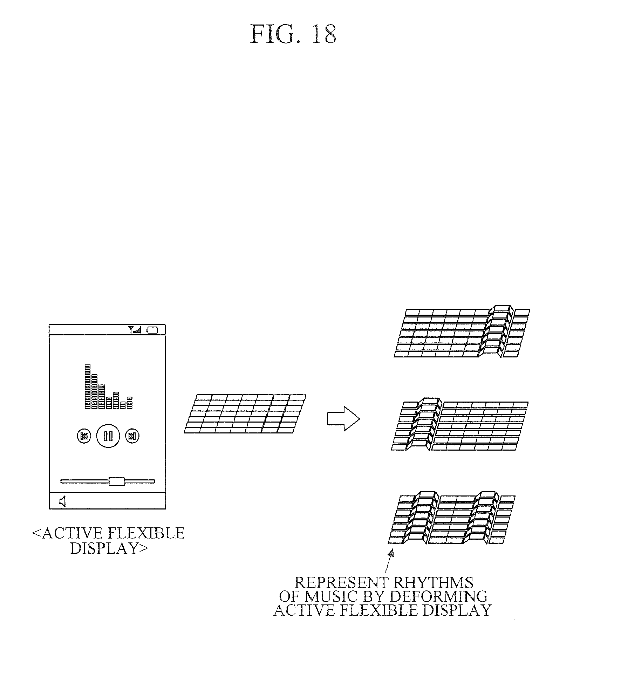

Referring to FIG. 18, if music is played, the recognition unit 710 may recognize attributes, such as rhythm, variations in tempo, and the like, of the music. The control unit 730 may instruct the active flexible display 750 to be deformed based on the attribute of the music. The power supply unit 751 may apply power to the driving unit 752 to control the active flexible display 750 to move or be deformed based on the music being played. The shape of the active flexible display 750 may indicate that music is being played.

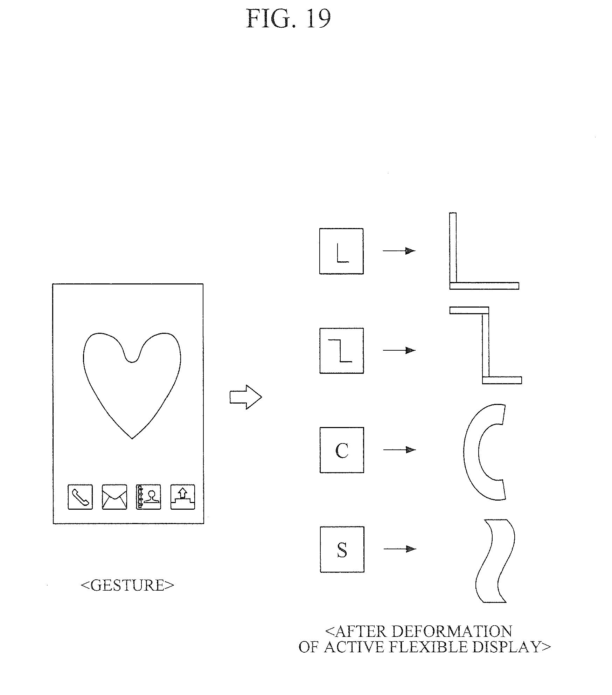

Referring to FIG. 19, if a gesture input is received, the recognition unit 710 may recognize the gesture input, and the control unit 730 may instruct the active flexible display 750 to be deformed in a shape that is similar to the gesture input. The power supply unit 751 may apply power to the driving unit 752 so that the driving unit 752 may control the active flexible display 750 to be deformed in the shape similar to the gesture input.

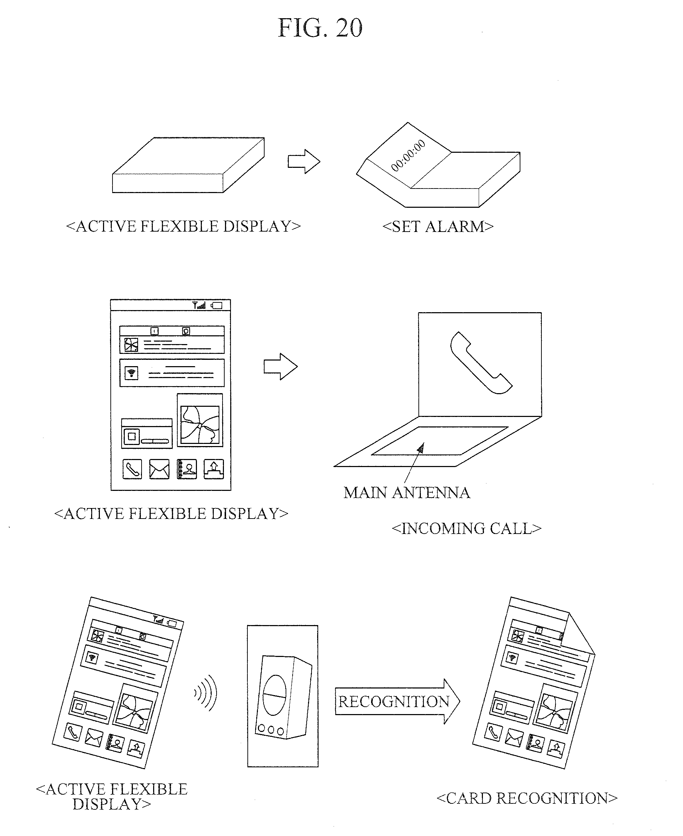

Referring to FIG. 20, in response to an alarm being set, the active flexible display 750 may be deformed or bent, and the date and time of the alarm and other related information may be displayed on the active flexible display 750. For example, the recognition unit 710 may recognize a setting of the alarm, and the control unit 730 may, based on the recognition, control the power supply unit 751 to apply power to the driving unit 752. Accordingly, the driving unit 752 may deform the active flexible display 750. Therefore, various information, such as schedule information, morning-call information, alarm information, D-day information, and the like, and various events, such as an incoming video call, an incoming SMS message, and the like may be recognized more easily.

Further, in response to an incoming call, the active flexible display 750 may be deformed so that an antenna may be located due to deformation as far as possible from the active flexible display 750. Thus, the performance of the antenna may be improved.

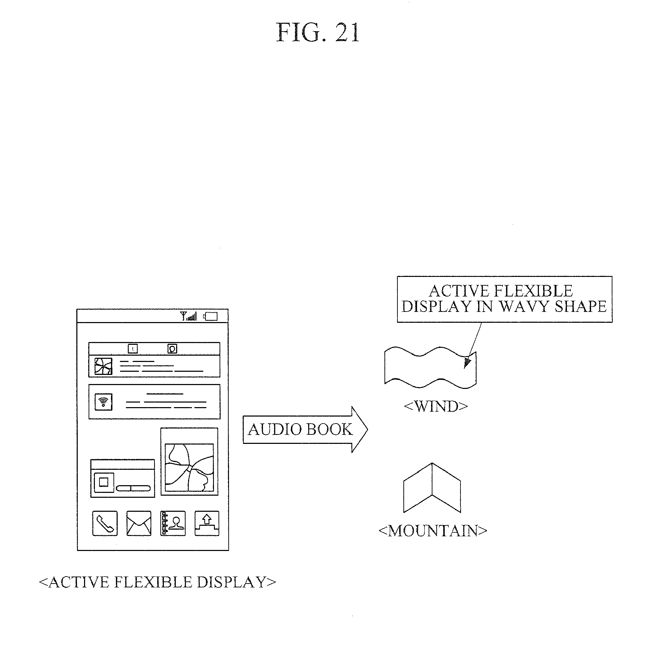

Referring to FIG. 21, various aspects of the exemplary embodiment are directed towards providing active flexible display that may be applied to audio books along with e-books, which have been available for various computing devices (such as mobile terminals).

If an audio book (for example, a children's book) is being played back, the active flexible display 750 may be deformed based on the content of the audio book. For example, in response to a portion of the audio book currently being played saying "The wind was gently blowing," the active flexible display 750 may be deformed into a wavy shape as if it were a piece of paper that flutters in the wind. In another example, in response to the current portion of the audio book saying, "The mountain was so high," the active flexible display 750 may be folded into the shape of a mountain. Therefore, it is possible to help the understanding of the content of an audio book and improve the learning ability of individuals (for example, infants and children) who are listening to the audio book.

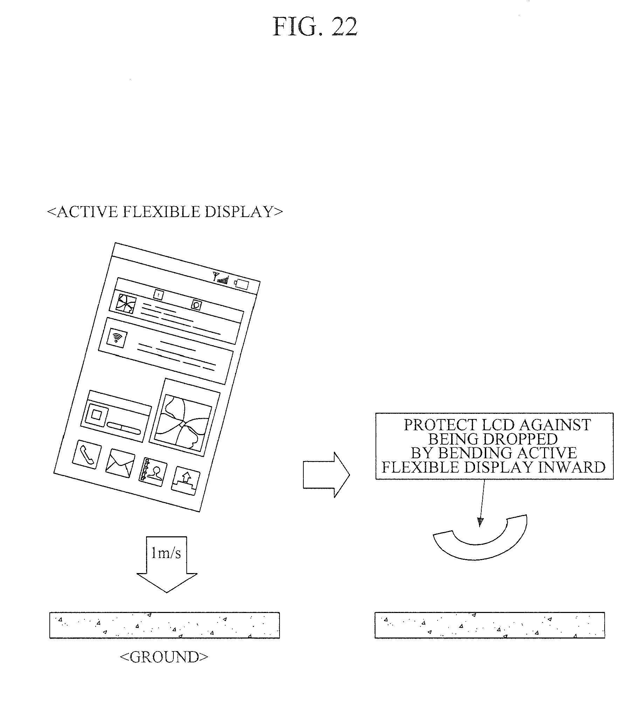

Referring to FIG. 22, in response to a velocity higher than a specific threshold being detected from the apparatus including the active flexible display 750 by the recognition unit 710 with the aid of an acceleration sensor or the like, the control unit 730 may perform data processing to control the power supply unit 751 to apply power to one or more matrix cells of the driving unit 752. Accordingly, the driving unit 752 may deform the active flexible display 750. This deformation may prevent damage if the apparatus is dropped. Therefore, it is possible to protect the active flexible display 750, which may be an LCD, if dropped.

As described above, it is possible to overcome the limitations of existing image display devices that only passively respond to physical manipulations applied thereto externally and improve an intuitive recognition of images and sounds by deforming a flexible display device in various shapes in connection with various applications or operations that are performed in association with an electronic device, such as a mobile terminal.

In addition, the access of various audio/video data is improved by appropriately deforming an image display device in accordance with an operation of the device.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
Included in an active flexible display is flexible display unit to output an image; and a driving unit to deform the display unit based on a voltage being applied to the display unit. A method to control a flexible display includes recognizing an occurrence of a specific event; and applying a voltage to deform the active flexible display to a shape based on the recognized event.

## Claims

1. An active flexible display, comprising:
a flexible display unit adapted to output an image; and
a driving unit adapted to deform the flexible display unit based on a voltage being applied to the display unit.

2. The active flexible display of claim 1, wherein the driving unit comprises at least one of a device adapted to contract or to expand in response to a voltage being applied thereto, and an ionic polymer-metal composite (IPMC) layer.

3. The active flexible display of claim 1 or 2, wherein the driving unit comprises a plurality of matrix cells with a specific size and is adapted to be deformed in response to a fixed voltage being applied to one or more rows or columns of the plurality of matrix cells.

4. The active flexible display of claim 1 or 2, wherein the driving unit comprises a plurality of matrix cells with a specific size and being arranged such that a respective voltage is appicable to each matrix cell of the plurality of matrix cells.

5. The active flexible display of any of claims 1 to 4, wherein the driving unit is attached to a bottom of the flexible display unit.

6. The active flexible display of any of claims 1 to 5, wherein the flexible display unit comprises a touch screen unit.

7. An apparatus to control a flexible display, the apparatus comprising:
a recognition unit adapted to recognize an event;
a memory adapted to store deformation pattern information corresponding to the recognized event;
a search module adapted to search for the deformation pattern information from the memory; and
an execution instruction module adapted to output a voltage application control signal based on the deformation pattern information.

8. The apparatus of claim 7, wherein the flexible display comprises a plurality of matrix cells with a specific size and is deformed in response to the voltage application control signal, said voltage application control signal preferably comprising matrix cell location information indicating an amount of voltage to apply for each matrix cell of the plurality of matrix cells, the amount of voltage preferably corresponding to an amount of deformation.

9. The apparatus of claim 7 or 8, wherein the flexible display comprises a plurality of matrix cells with a specific size and is adapted to be deformed in response to the voltage application control signal being applied to one or more rows or columns of the plurality of matrix cells.

10. The apparatus of any of claims 7 to 9, further comprising a power supply unit comprising:
a power supply source adapted to supply power;
a direct current (DC) converter adapted to convert the power supplied by the power supply source into a DC signal based on the voltage application control signal; and
a voltage controller adapted to apply the DC signal to one or more matrix cells based on the voltage application control signal.

11. The apparatus of claim 10, wherein the power supply unit comprises two or more DC converters or two or more voltage controllers corresponding to the two or more DC converters, respectively.

12. The apparatus of any of claims 7 to 11, further comprising:
a determination module adapted to determine a type of signal recognized by the recognition unit,
wherein the search module is adapted to search the memory for deformation pattern information based on the determined type of signal.

13. The apparatus of any of claims 7 to 12, wherein the event is at least one of: a touch, an audio stimulus, an input to a phone, a specific keyword, and a motion picture being played.

14. A method for controlling an active flexible display, the method comprising:
recognizing an occurrence of a specific event; and
applying a voltage to deform the active flexible display to a shape based on the recognized event.

15. The method of claim 14, further comprising:
searching for deformation pattern information corresponding to the specific event,
wherein the application of voltage is based on the deformation pattern information,
and, preferably, further comprising:
deforming a plurality of matrix cells of the active flexible display by applying a specific voltage being applied the plurality of matrix cells; and
determining which of the plurality of matrix cells to apply a voltage to;
determining a voltage level for each of the plurality of matrix cells, wherein the application of voltage is based on the determined voltage level.
